# EUROPÄISCHE PATENTANMELDUNG

(11) **EP 1 236 951 A1**
(43) Veröffentlichungstag der Anmeldung: **04.09.2002**
(21) Anmeldenummer: 01810206.1
(22) Anmeldetag: 28.02.2001
(51) Int. Cl.: F21V 8/00, D04H 5/04, B32B 17/04, B44C 5/04, B44F 1/08

(54) **Fasermatte**

(71) Anmelder: Herzog & de Meuron Architekten AG, 4054 Basel (CH)
(72) Erfinder: Herzog, Jacques, 4056 Basel (CH); de Meuron, Pierre, 4125 Riehen (CH); Marbach, Stefan, 4056 Basel (CH); Hardt, Wolfgang, 4051 Basel (CH); Pedrocchi, Reto, 4057 Basel (CH)
(74) Vertreter: Heinen, Detlef

(57) **Zusammenfassung**

Eine Fasermatte (1)umfasst eine Vielzahl von Kurzfasern (2), die miteinander zu einer Fasermatte verbunden sind. In die Fasermatte hinein ist eine Vielzahl von einzelnen illuminierbaren Langfasern (3) eingearbeitet, die an ihrem proximalen Ende mit einer Einrichtung (30) zum Ankoppeln an eine Lichtquelle verbunden sind. Ferner wird ein Verbundmaterial (5) mit einer solchen Fasermatte (1) vorgeschlagen. Als Anwendung kommt beispielsweise eine Lichtwand oder ein Tisch (6) in Frage.

## Beschreibung

Die Erfindung betrifft eine Fasermatte, welche eine Vielzahl von Kurzfasern umfasst, die miteinander zu einer Fasermatte verbunden sind, in welche Fasermatte hinein eine Vielzahl von einzelnen illuminierbaren Langfasern eingearbeitet ist, ferner ein Verbundmaterial umfassend eine solche Fasermatte, sowie eine Lichtwand und einen Tisch umfassend eine solche Fasermatte bzw. hergestellt aus einem solchen Verbundmaterial.

Fasermatten mit einer Vielzahl von Kurzfasern sind an sich bekannt. Sie kommen beispielsweise als Verstärkungsmatten in Kunststoff-Verbundplatten zum Einsatz. Ferner sind auch vergleichsweise dicke Stränge aus Langfasern bekannt, wobei die einzelnen Langfasern miteinander über ihre Länge zu einem Strang verdrillt sind. Diese Stränge werden beispielsweise als Leuchtstränge eingesetzt, wobei die Helligkeitsverteilung entlang der einzelnen Fasern bzw. entlang des Strangs mehr oder weniger gleichmässig ist.

Zur Erzielung bestimmter feinaderiger optischer Effekte in Flächen, z.B. an aus Kunstharz hergestellten Gegenständen, sind derartige Stränge aufgrund ihrer grossen Dicke gänzlich ungeeignet. Andererseits lassen sich einzelne solcher Langfasern auch nicht in Kunstharzschichten einbetten, weil man beim Aufbau der einzelnen Schichten solcher Kunstharzplatten "nass in nass" arbeiten muss (d.h. die verschiedenen Schichten müssen jeweils dann aufgetragen werden, wenn alle Schichten noch feucht sind), damit die einzelnen Schichten miteinander verbunden sind und es nicht zwischen den Schichten zu Abscherungen kommen kann. Beim Arbeiten "nass in nass" kann man jedoch die einzelnen Fasern nicht gut in eine solche "nasse" Schicht einbringen, weil sie sich sonst aufrichten.

Hier will die Erfindung Abhilfe schaffen, indem sie eine Möglichkeit bereitstellt, solche feinaderigen optischen Effekte zu erreichen und diese feinaderigen optischen Effekte insbesondere auch in solchen Flächen zu ermöglichen, bei deren Aufbau "nass in nass" gearbeitet werden muss.

Gemäss einem Aspekt der Erfindung wird daher eine Fasermatte vorgeschlagen, welche eine Vielzahl von Kurzfasern umfasst, die miteinander zu einer Fasermatte verbunden sind, in welche Fasermatte hinein eine Vielzahl von einzelnen illuminierbaren Langfasern eingearbeitet ist (mit "in die Fasermatte eingearbeitet" soll auch "auf die Fasermatte aufgebracht" umfasst werden), die an ihrem proximalen Ende mit einer Einrichtung zum Ankoppeln an eine Lichtquelle verbunden sind. Die Fasermatte weist eine Stabilität auf, welche es erlaubt, die in die Fasermatte eingebrachten illuminierbaren Langfasern an Ort und Stelle zu halten, ohne dass sie sich bei einer "nass in nass" - Arbeitsweise in dem noch feuchten Kunststoff, z.B. Kunstharz, aufrichten. Man kann dadurch die einzelnen illuminierbaren Langfasern in gewünschter Weise anordnen und die feinaderigen optischen Effekte in den Flächen erreichen und gleichzeitig kann die "nass in nass" - Arbeitsweise zur Anwendung kommen. Es entsteht auf diese Weise ein Verbundmaterial, bei welchem die eingebetteten Fasermatten ausserdem zu einer besseren Stabilität des Materials insgesamt beitragen.

Bei einem bevorzugten Ausführungsbeispiel weist die Fasermatte ein Mattengewicht im Bereich von etwa 125 g/m² bis etwa 450 g/m² auf, vorzugsweise etwa 225 g/m², wobei Fiberglasfasern als Kurzfasern bevorzugt sind. Diese Mattengewichte sind insofern vorteilhaft, als sie eine derartige Menge an Kurzfasern aufweisen, bei denen der feinaderige optische Effekt der Langfasern gut wahrgenommen werden kann. Bei einem wesentlich grösseren Mattengewicht tritt durch die grosse Anzahl an Kurzfasern bei Fiberglasfasern eine stark wahrnehmbare Grünfärbung auf, während eigentlich ein farbloser transparenter optischer Effekt (Naturton) erwünscht ist. Bei einem wesentlich geringeren Mattengewicht wirkt die Fasermatte zu wenig mechanisch stabilisierend.

Wie bereits erwähnt, sind solche Ausführungsbeispiele besonders vorteilhaft, bei denen die Kurzfasern aus Fiberglas und die Langfasern aus Polymethylmerhacrylatfasern mit einem Durchmesser bis zu etwa 1 mm sind, vorzugsweise mit einem Faserdurchmesser von etwa 0.8 mm. Wesentlich grössere Durchmesser der PMMA-Fasern nehmen den feinaderigen optischen Effekt.

Weiterhin bevorzugt ist es, wenn die Kurzfasern der Fasermatte pulvergebunden sind. Das heisst, dass die Fasermatte aus Kurzfasern hergestellt sein kann, die mit Hilfe eines Pulvers miteinander zu einer Fasermatte "verklebt" werden, wozu beispielsweise ein Verpressen (Sintern) der Kurzfasern mit dem Pulver erfolgen kann. Eine auf diese Weise hergestellte Fasermatte weist einerseits eine gewisse Stabilität auf, andererseits aber auch eine gewisse Flexibilität, ohne dass dabei die Struktur der Fasermatte, die durch die einzelnen Kurzfasern gebildet wird, verloren geht.

Gemäss einem besonders bevorzugten Ausführungsbeispiel ist die Fasermatte derart ausgebildet, dass die Oberfläche der Langfasern entlang den Langfasern örtlich unregelmässig verteilte, aufgerauhte Stellen aufweist, sodass bei an die Lichtquelle angeschlossener Fasermatte die Langfasern an diesen aufgerauhten Stellen jeweils Helligkeitsmaxima aufweisen. In den dazwischenliegenden, nicht aufgerauhten Bereichen weisen sie hingegen wenig oder gar keine wahrnehmbare Helligkeit auf. Auf diese Weise erhält man einen optischen Effekt, der bezüglich der Helligkeit örtlich unregelmässig verteilt entlang der einzelnen Adern an einigen Stellen sehr ausgeprägt ist, zwischen diesen ausgeprägten Helligkeitsmaxima aber vergleichsweise schwach oder kaum erkennbar ist.

Zur Erzielung dieses Effekts können die Langfasern durch eine mechanische Vorbehandlung ihrer Oberfläche, beispielsweise durch Schleifen oder Schmirgeln (auch Sandstrahlen kommt in Betracht), oder durch eine chemische Vorbehandlung aufgerauht sein, wodurch mit einem vertretbaren Aufwand und an sich konventioneller Technik der gewünschte Effekt erreicht werden kann.

Ein weiterer Aspekt der vorliegenden Erfindung betrifft ein. Verbundmaterial aus einem Kunststoff, z.B. einem Kunstharz, umfassend eine wie oben beschriebene Fasermatte. Die Fasermatte ist in den Kunststoff bzw. das Kunstharz eingebettet, wobei die Verbundplatte zu beiden Seiten der Fasermatte mindestens eine Kunststoffschicht bzw. Kunstharzschicht aufweist. Der Kunststoff bzw. das Kunstharz dringt bei der "nass in nass" - Arbeitsweise also quasi durch die Zwischenräume der Fasermatte hindurch, wodurch die beiden Kunststoff- bzw. Kunstharzschichten miteinander verbunden sind und die Fasermatte zwischen diesen eingebettet ist.

Gemäss einem Ausführungsbeispiel des Verbundmaterials kann wenigstens auf einer Seite aussen auf der Kunststoffschicht bzw. Kunstharzschicht, welche die Fasermatte mit den illuminierbaren Langfasern umgibt, eine weitere Fasermatte vorgesehen sein, die ebenfalls eine Vielzahl von Kurzfasern umfasst, die miteinander zu einer Fasermatte verbunden sind, jedoch keine Langfasern enthält. Dadurch wird der Struktureffekt, der durch die Kurzfasern der Fasermatte bewirkt wird, noch etwas verstärkt, vor allem wird aber auch die mechanische Stabilität weiter erhöht. Diese weitere Fasermatte ist zwischen der Kunststoffschicht bzw. Kunstharzschicht, die die Fasermatte mit den Langfasern umgibt, und einer weiteren Kunststoffschicht bzw. Kunstharzschicht in den Kunststoff bzw. in das Kunstharz eingebettet ist. Es ist selbstverständlich, dass je nachdem, wie ausgeprägt der Struktureffekt sein soll bzw. wie stark die mechanische Stabilität noch erhöht werden soll, noch weitere solche Fasermatten ohne Langfasern vorgesehen sein können.

Weiterhin kann aussen auf die äusserste Kunststoffschicht bzw. Kunstharzschicht eine Feinschicht - ein sogenannter Finish - aufgebracht sein. Dies kann z.B. ein spezieller Lack sein, welcher beispielsweise als Klarlack ausgebildet sein kann, um eine besonders glatte Oberfläche zu erzeugen.

Ein weiterer Aspekt der Erfindung betrifft eine Lichtwand, welche eine wie oben beschriebene Fasermatte umfasst bzw. aus einem wie oben beschriebenen Verbundmaterial hergestellt ist. Eine Lichtwand ist eine Möglichkeit der Anwendung für eine derartige Fasermatte bzw. ein derartiges Verbundmaterial.

Ein weiterer Aspekt der Erfindung betrifft einen Tisch, welcher eine wie oben beschriebene Fasermatte umfasst bzw. aus einem wie oben beschriebenen Verbundmaterial hergestellt ist. Ein Tisch ist eine weitere, besonders interessante Anwendung für eine derartige Fasermatte bzw. ein derartiges Verbundmaterial.

Bei einem Ausführungsbeispiel eines solchen Tisches weist dieser im aufgestellten Zustand eine nach oben weisende Fläche sowie mehrere nach aussen weisende Seitenflächen auf. Sowohl in der nach oben weisenden Fläche als auch in den nach aussen weisenden Seitenflächen sind Vertiefungen vorgesehen, in welche hinein beispielsweise Ausstellungs- oder Verkaufsgegenstände hineingestellt werden können. Sowohl in der nach oben weisenden Fläche als auch in den nach aussen weisenden Seitenflächen als auch in den Vertiefungen sind wie oben beschriebene Fasermatten vorgesehen. Diese bewirken den besonderen feinaderigen optischen Effekt.

Grundsätzlich könnte man sich noch weitere Objekte vorstellen, wie beispielsweise Bänke oder Lampen verschiedenen Typs, etc., die eine wie oben beschriebene Fasermatte umfassen bzw. aus einem wie oben beschriebenen Verbundmaterial hergestellt sind. Da es hier noch sehr viele weitere Möglichkeiten der Anwendung gibt, soll es bei dieser kurzen Aufzählung bleiben, ohne dabei aber den Schutz beschränken zu wollen.

Weitere bevorzugte Ausführungsformen ergeben sich aus der nachfolgenden Beschreibung mit Hilfe der Zeichnung. Es zeigen:
- Fig. 1: ein Ausschnitt aus einem Ausführungsbeispiel einer erfindungsgemässen Fasermatte,
- Fig. 2-11: eine Ausführungsvariante für die verschiedenen Schritte zur Herstellung eines Ausführungsbeispiels des erfindungsgemässen Verbundmaterials,
und
- Fig. 12: ein Ausführungsbeispiel eines erfindungemässen Tischs.

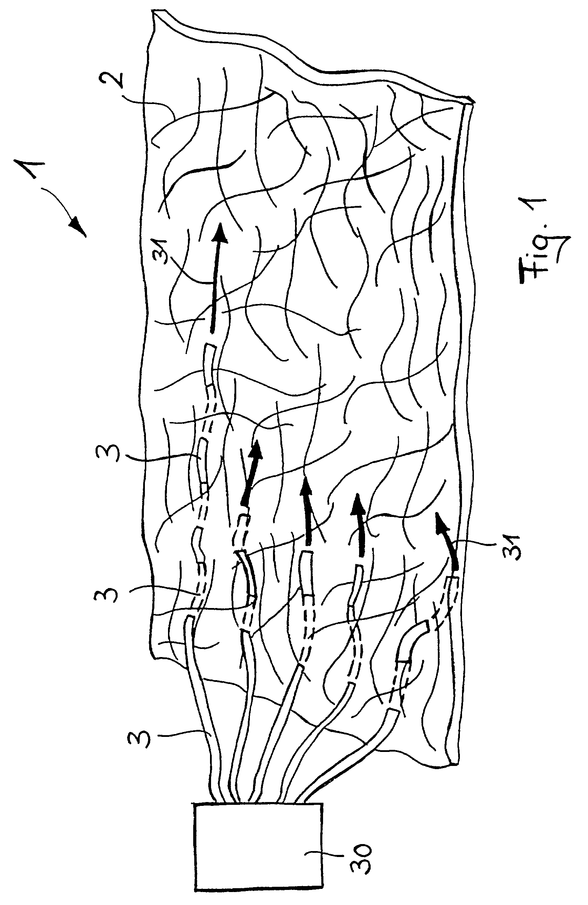

In Fig. 1 ist ein Ausschnitt aus einem Ausführungsbeispiel einer erfindungsgemässen Fasermatte dargestellt. Die Fasermatte 1 umfasst eine Vielzahl von Kurzfasern 2, die miteinander zu der Fasermatte verbunden sind. In diese Fasermatte 1 hinein eingearbeitet sind eine Vielzahl von einzelnen illuminierbaren Langfasern 3, die an ihrem proximalen Ende jeweils mit einem Adapter 30 verbunden sind. Der Adapter 30 kann auf ein entsprechendes Gegenstück einer Lichtquelle (hier nicht dargestellt) aufgesteckt werden. Zum Einkoppeln des Lichts von der Lichtquelle in die einzelnen Fasern können in dem Gegenstück und in dem Adapter optische Mittel, wie z.B. optische Linsen, vorgesehen sein.

Die Langfasern 3 können durch die Fasermatte 1 hindurch in die Fasermatte 1 "eingeflochten" sein, was in Fig. 1 dadurch symbolisiert ist, dass die Langfasern 3 zum Teil oberhalb (ausgezogene Linien) und zum Teil unterhalb (gestrichelte Linien) der Fasermatte 1 dargestellt sind. Sie können aber auch auf der Oberfläche der Fasermatte 1 fixiert sein, z.B. können sie auf der Fasermatte 1 aufgeklebt sein.

Aus zeichnerischen Gründen ist in Fig. 1 jeweils nur eine geringe Anzahl von Kurzfasern 2 und Langfasern 3 dargestellt, um den Aufbau der Fasermatte 1 im Prinzip zu erläutern. Die Langfasern 3 können ansonsten auch in völlig unterschiedlich verlaufenden Richtungen in die Fasermatte 1 eingebracht sein, wie später anhand eines Anwendungsbeispiels (Tisch in Fig. 12) noch gezeigt werden wird. Die Pfeile 31 stehen symbolisch für den weiteren Verlauf der Langfasern 3.

Vorzugsweise kommen Fasermatten 1 mit einem Mattengewicht im Bereich von etwa 125 g/m² bis etwa 450 g/m² zum Einsatz, besonders bevorzugt solche mit einem Mattengewicht von etwa 225 g/m². Die Mattengewichte beziehen sich ausschliesslich auf die Fasermatten 1 ohne die Langfasern 3, also auf die Fasermatten nur mit Kurzfasern 2 (vor dem Einarbeiten der Langfasern 3). Sie sind insofern vorteilhaft, als die entsprechenden Fasermatten 1 eine derartige Menge an Kurzfasern 2 aufweisen, bei denen der feinaderige optische Effekt der Langfasern 3 gut wahrgenommen werden kann. Bei einem wesentlich grösseren Mattengewicht tritt bei Fiberglasfasern eine zu starke Grünfärbung auf, bei einem wesentlich geringeren Mattengewicht wirkt die Fasermatte zu wenig mechanisch stabilisierend. Die Kurzfasern 2 sind, wie bereits erwähnt, vorzugsweise aus Fiberglas und weisen eine Länge auf die im Bereich von 20 mm bis etwa 60 mm liegen kann. Die Langfasern 3 sind vorzugsweise Polymethylmethacrylatfasern (PMMA-Fasern) mit einem Durchmesser bis zu etwa 1 mm, ein bevorzugter Durchmesser der Langfasern 3 ist 0.8 mm.

Bei einem besonders bevorzugten Ausführungsbeispiel sind die Oberflächen der Langfasern 3 entlang den Langfasern 3 an örtlich unregelmässig verteilten Stellen aufgerauht, was auf mechanische Weise, z.B. durch Anschmirgeln der Oberfläche der Langfasern 3 an bestimmten Stellen, erreicht werden kann. Dadurch wird erreicht, dass dann, wenn die Fasermatte 1 mittels des Adapters 30 an die Lichtquelle angeschlossen ist und Licht in die Langfasern 3 eingespeist wird, die Langfasern 3 an den aufgerauhten Stellen jeweils Helligkeitsmaxima aufweisen, während sie in den dazwischen liegenden, nicht aufgerauhten Bereichen vergleichsweise wenig oder gar keine wahrnehmbare Helligkeit aufweisen. Dieses Ausführungsbeispiel zeichnet sich durch seinen besonderen optischen Effekt mit mehreren ausgeprägten Helligkeitsmaxima entlang der Fasern aus, der für gestalterische Schöpfungen besonders gut ausgenutzt werden kann.

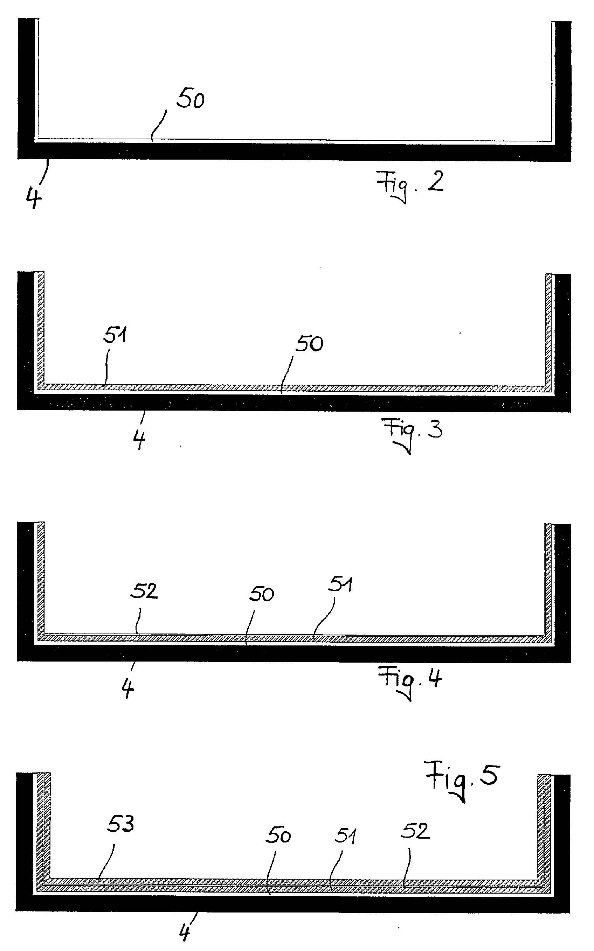

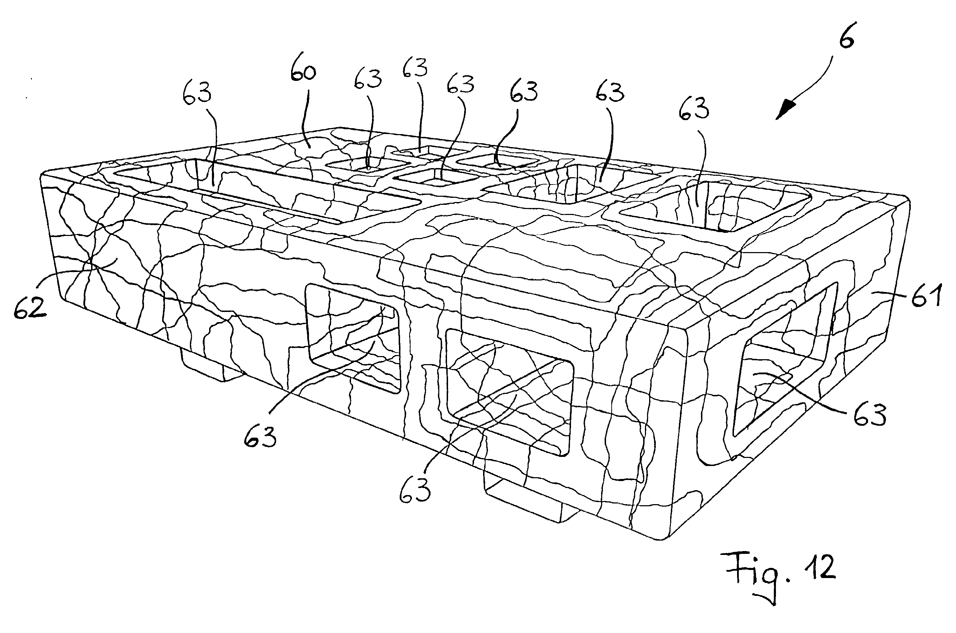

Im folgenden wird anhand von Fig. 2 bis Fig. 11 erläutert, wie mit Hilfe einer erfindungsgemässen Fasermatte 1 mit eingearbeiteten Langfasern 3 ein Verbundmaterial hergestellt werden kann. Bei der nachfolgenden Beschreibung dieser Herstellungsschritte handelt es sich ebenfalls um ein Ausführungsbeispiel für ein derartiges Verbundmaterial. Wie bereits zuvor erwähnt, kommt bei dieser Herstellungsart die sogenannte "nass in nass" - Arbeitsweise zum Einsatz, deren Vorteil bereits weiter oben erläutert sind.

Zunächst wird dabei in einem ersten Schritt (Fig. 2) in eine Form 4 eine erste Schicht 50, in die Form 4 eingebracht. Diese Schicht 50 ist in dem beschriebenen Ausführungsbeispiel die später - nach dem Herausnehmen aus der Form 4 - nach aussen weisende Schicht und kann infolgedessen die Feinschicht sein, beispielsweise ein Finish-Lack. Der Finish-Lack kann auf herkömmliche Art und Weise in die Form 4 eingebracht werden, z.B. mit Hilfe einer Spritzpistole, mit Hilfe eines Rollers oder eines Pinsels.

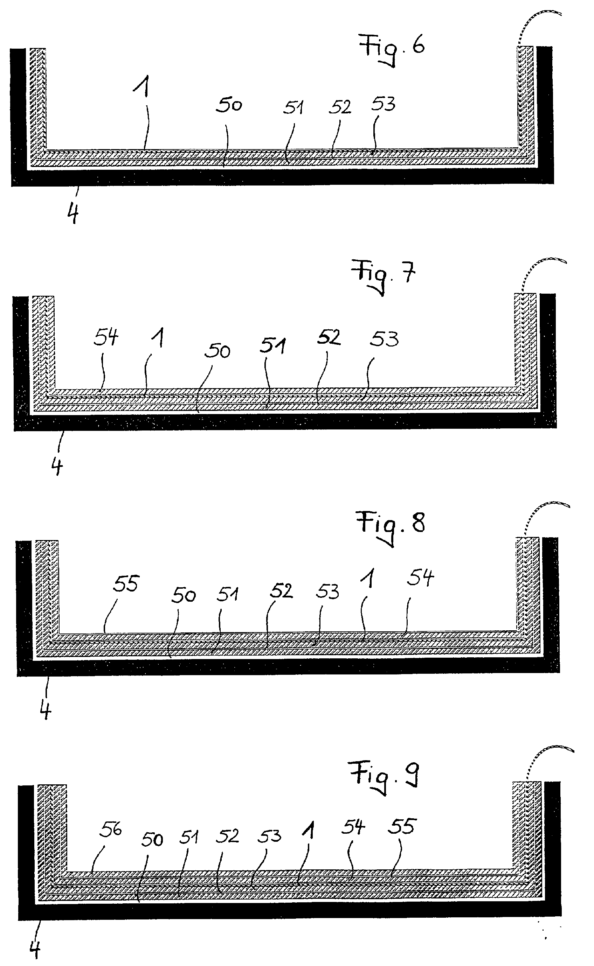

Sodann erfolgt in einem zweiten Schritt (Fig. 3) das Einbringen einer zweiten Schicht 51, welche eine Kunst-Harzschicht sein kann. Als Harze eignen sich hier insbesondere Epoxidharze, aber auch Harze anderen Typs kommen hierfür in Betracht. Die Harzschicht kann mit einem Roller oder mit einem Pinsel aufgebracht werden.

In einem daran anschliessenden dritten Schritt (Fig. 4) wird eine erste Fasermatte 52 eingelegt, welche allerdings nur Kurzfasern aufweist, im Prinzip also ähnlich wie eine erfindungsgemässe Fasermatte 1 ausgebildet sein kann, jedoch keine eingearbeiteten Langfasern aufweist. Diese erste Fasermatte 52 dient einerseits der mechanischen Stabilisierung des Verbundmaterials, andererseits kann damit auch der optische Struktureindruck verstärkt werden.

An das Einbringen der Fasermatte 52 schliesst sich in einem vierten Schritt (Fig. 5) erneut das Einbringen einer zweiten Harzschicht 53 an, welche wie zuvor schon beschrieben mit einem Roller aufgebracht werden kann.

Sodann wird in einem fünften Schritt (Fig. 6) eine erfindungsgemässe Fasermatte 1 eingebracht, in welcher Langfasern 3 eingearbeitet sind. Die Langfasern 3 sind aus der Form herausgeführt und - wie in Fig. 1 dargestellt - an ihrem proximalen Ende mit dem Adapter 30 verbunden, der in Fig. 7 und den nachfolgenden Figuren allerdings nicht mehr dargestellt ist.

An das Einbringen der erfindungsgemässen Fasermatte 1 schliesst sich in einem sechsten Schritt (Fig. 7) erneut das Einbringen einer dritten Harzschicht 54 an, welche wie zuvor schon beschrieben mit einem Roller aufgebracht werden kann.

Sodann wird in einem siebten Schritt (Fig. 8) eine zweite Fasermatte 55 eingebracht, die erneut nur Kurzfasern aufweist und der erfindungsgemässen Fasermatte ähnelt, aber keine Langfasern enthält. Diese Fasermatte 55 dient erneut der mechanischen Stabilisierung des Verbundkörpers.

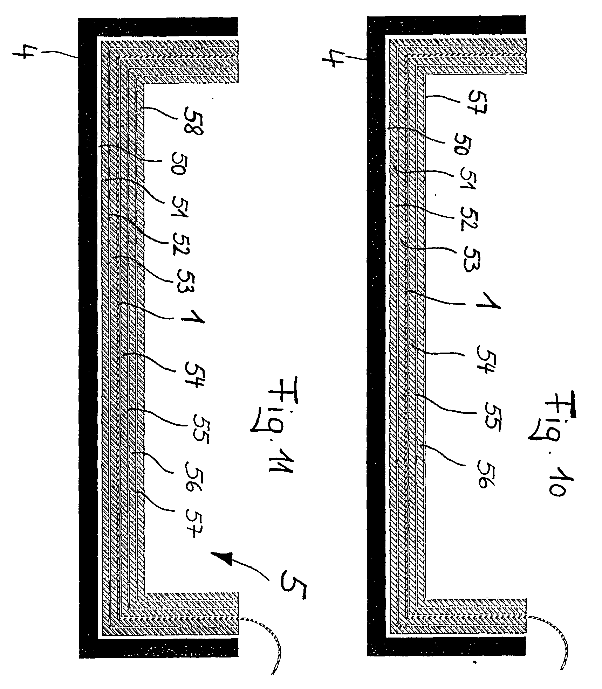

In einem achten Schritt (Fig. 9) schliesst sich das Einbringen einer vierten Harzschicht 56 an, worauf in einem neunten Schritt (Fig. 10) eine weitere Fasermatte 57 aus Kurzfasern eingebracht wird, die der weiteren mechanischen Stabilisierung dient. Schliesslich wird in einem zehnten Schritt eine letzte - die fünfte - Harzschicht 58 eingebracht und der ganze Aufbau kann anschliessend trocknen und so das fertige Verbundmaterial 5 bilden, welches sämtliche vorbeschriebenen Schichten 50-58 sowie die eingebettete Fasermatte 1 umfasst.

Ein Anwendungsbeispiel für ein derartiges Verbundmaterial, welches durchaus auch weniger Schichten umfassen kann als das anhand der Fig. 2-11 beschriebene Ausführungsbeispiel, ist beispielsweise eine Lichtwand, welche als Platte aus einem solchen Verbundmaterial ausgebildet sein kann.

Ein weiteres Anwendungsbeispiel für ein derartiges Verbundmaterial ist beispielsweise ein Tisch, welcher beispielsweise als Ausstellungstisch oder als Verkaufstisch dienen kann. Ein Ausführungsbeispiel, wie ein derartiger Tisch aussehen kann, ist in Fig. 12 dargestellt. Der Tisch 6 weist eine nach oben weisende Fläche 60 sowie mehrere Seitenflächen auf, von denen in Fig. 12 nur die Seitenflächen 61 und 62 erkennbar sind. In der nach oben weisenden Fläche 60 sowie in den Seitenflächen sind Vertiefungen 63 vorgesehen, in welche hinein Ausstellungsgegenstände oder auch Verkaufsgegenstände hineingestellt werden können. Je nach Wert der Gegenstände kann vor der jeweiligen Vertiefung 63 ggf. eine Glasscheibe vorgesehen werden, welche ggf. einbruchgesichert ist, dies ist in Fig. 12 jedoch nicht dargestellt.

In Fig. 12 erkennt man die einzelnen Langfasern 3, die in der Fasermatte 1 in dem Verbundmaterial vorgesehen sind. Auf die Darstellung der Kurfzaserstruktur wurde in Fig. 12 aus zeichnerischen Gründen verzichtet, sie trägt aber durchaus zum optischen Gesamteindruck bei. Folgerichtig sind auch die Fasermatten 1 nicht zu erkennen, sondern nur die darin eingearbeiteten Langfasern 3. Die Langfasern 3 sind - wie oben bereits beschrieben - illuminierbar, insbesondere können sie sogar an örtlich unregelmässig verteilten Stellen (an den aufgerauhten Stellen, siehe oben) Helligkeitsmaxima aufweisen und in dazwischen liegenden Bereichen nur wenig hell oder gar nicht wahrnehmbar hell sein. Auf diese Weise sind besonders attraktive gestalterische Beleuchtungen des Tischs 6 möglich. Die Beleuchtung kann dabei von unterhalb also quasi von "innerhalb" (also von der Innenseite des Tischs her) des Tischs 6 erfolgen, wo der Adapter bzw. im Falle von mehreren Adaptern die Adapter angeordnet sein können, damit sie für den Betrachter von aussen verborgen bleiben. Auf diese Weise ist es auch möglich, einen Tisch aus im wesentlichen transparentem Material mit farbigem Licht zu erleuchten. Um hier verschiedene Farbeindrücke zu erhalten, ist es lediglich erforderlich, das Licht der Lichtquelle entsprechend zu filtern, sodass nur das Licht mit der gewünschten Farbe in die Langfasern 3 eingespeist wird.

Aufgrund der Vertiefungen in den einzelnen Seiten des Tischs kann es erforderlich sein, dass die einzelnen "Seitenwände" des Tischs 6 und auch die "Tischplatte" als gesonderte Teile hergestellt werden müssen, weil einerseits die Fasermatten keine beliebige Flexibilität aufweisen und auch die Form zur Herstellung eines einstückigen Tischs beliebig kompliziert werden kann, falls es überhaupt möglich sein sollte den Tisch einstückig herzustellen. Das führt dann dazu, dass die einzelnen Teile anschliessend zu dem Tisch 6 verbunden werden müssen, heisst aber auch, dass vom Prinzip her jedes dieser Teile getrennt illuminierbar ist. Natürlich sind die einzelnen Teile auch alle mit dem gleichen Licht illuminierbar, sie müssen dazu nur an die gleiche Lichtquelle angeschlossen werden, was mittels des jeweils vorgesehenen Adapters technisch allerdings keine Schwierigkeit darstellt.

## Patentansprüche

1. Fasermatte (1), welche eine Vielzahl von Kurzfasern (2) umfasst, die miteinander zu einer Fasermatte verbunden sind, in welche Fasermatte hinein eine Vielzahl von einzelnen illuminierbaren Langfasern (3) eingearbeitet ist, die an ihrem proximalen Ende mit einer Einrichtung (30) zum Ankoppeln an eine Lichtquelle verbunden sind.

2. Fasermatte (1) nach Anspruch 1, welche ein Mattengewicht im Bereich von etwa 125 g/m² bis etwa 450 g/m² aufweist, vorzugsweise ein Mattengewicht von etwa 225 g/m².

3. Fasermatte (1) nach einem der Ansprüche 1 oder 2, bei welcher die Kurzfasern (2) aus Fiberglas und die Langfasern (3) Polymethylmethacrylatfasern mit einem Durchmesser bis zu etwa 1 mm sind, vorzugsweise mit einem Faserdurchmesser von etwa 0.8 mm.

4. Fasermatte (1) nach einem der vorangehenden Ansprüche, bei welcher die Kurzfasern (2) der Fasermatte pulvergebunden sind.

5. Fasermatte (1) nach einem der vorangehenden Ansprüche, bei welcher die Oberfläche der Langfasern (3) entlang den Langfasern örtlich unregelmässig verteilte, aufgerauhte Stellen aufweist, sodass bei an die Lichtquelle angeschlossener Fasermatte die Langfasern (3) an diesen aufgerauhten Stellen jeweils Helligkeitsmaxima aufweisen, während sie in den dazwischenliegenden, nicht aufgerauhten Bereichen wenig oder gar keine wahrnehmbare Helligkeit aufweisen.

6. Fasermatte (1) nach Anspruch 5, bei welcher die Langfasern (3) durch eine mechanische Vorbehandlung ihrer Oberfläche, beispielsweise durch Schleifen oder Schmirgeln, oder durch eine chemische Vorbehandlung aufgerauht sind.

7. Verbundmaterial (5) aus einem Kunststoff, z.B. einem Kunstharz, umfassend eine Fasermatte (1) gemäss einem der vorangehenden Ansprüche, welche in den Kunststoff bzw. das Kunstharz eingebettet ist, wobei das Verbundmaterial (5) zu beiden Seiten der Fasermatte (1) mindestens eine Kunststoffschicht bzw. Kunstharzschicht aufweist.

8. Verbundmaterial (5) nach Anspruch 7, bei welchem wenigstens auf einer Seite aussen auf der Kunststoffschicht bzw. Kunstharzschicht (53;54), welche die Fasermatte (1) mit den illuminierbaren Langfasern (3) umgibt, eine weitere Fasermatte (52;55,57) vorgesehen ist, die ebenfalls eine Vielzahl von Kurzfasern umfasst, die miteinander zu einer Fasermatte verbunden sind, jedoch keine Langfasern, wobei diese weitere Fasermatte (52;55,57) zwischen der Kunststoffschicht bzw. Kunstharzschicht (53;54), die die Fasermatte (1) mit den Langfasern (3) umgibt, und einer weiteren Kunststoffschicht bzw. Kunstharzschicht (51;56,58) in den Kunststoff bzw. in das Kunstharz eingebettet ist.

9. Verbundmaterial (5) nach einem der Ansprüche 7 oder 8, bei welchem aussen auf die äusserste Kunststoffschicht bzw. Kunstharzschicht eine Feinschicht (50) - ein sogenannter Finish - aufgebracht ist.

10. Lichtwand umfassend eine Fasermatte (1) gemäss einem der Ansprüche 1 bis 6 bzw. hergestellt aus einem Verbundmaterial (5) gemäss einem der Ansprüche 7 bis 9.

11. Tisch (6) umfassend eine Fasermatte (1) gemäss einem der Ansprüche 1 bis 6 bzw. hergestellt aus einem Verbundmaterial (5) gemäss einem der Ansprüche 7 bis 9.

12. Tisch (6) nach Anspruch 11, welcher im aufgestellten Zustand eine nach oben weisende Fläche (60) sowie mehrere nach aussen weisende Seitenflächen (61,62) aufweist, wobei sowohl in der nach oben weisenden Fläche (60) als auch in den nach aussen weisenden Seitenflächen (61,62) Vertiefungen (63) vorgesehen sind, in welche hinein beispielsweise Ausstellungs- oder Verkaufsgegenstände hineingestellt werden können, bei welchem Tisch (6) sowohl in der nach oben weisende Fläche (60) als auch in den nach aussen weisenden Seitenflächen (61,62) als auch in den Vertiefungen (63) Fasermatten (1) gemäss einem der Ansprüche 1 bis 6 vorgesehen sind.
